# EUROPEAN PATENT SPECIFICATION

(11) **EP 4 268 566 B1**
(45) Date of publication and mention of the grant of the patent: **14.10.2026**
(21) Application number: 22170900.9
(22) Date of filing: 29.04.2022
(51) Int. Cl.: A01D 34/14, A01D 34/40

(54) **A SYSTEM AND METHOD FOR MONITORING THE CONDITION OF THE CUTTING KNIVES OF A COMBINE HEADER**
SYSTEM UND VERFAHREN ZUR ÜBERWACHUNG DES ZUSTANDES DER SCHNEIDMESSER EINES MÄHDRESCHERS
SYSTÈME ET PROCÉDÉ DE SURVEILLANCE DE L'ÉTAT DES COUTEAUX DE COUPE D'UNE MOISSONNEUSE-BATTEUSE

(43) Date of publication of application: 01.11.2023
(73) Proprietor: CNH Industrial Belgium N.V., 8210 Zedelgem (BE)
(72) Inventor: Goossens, Jorre, 2450 Meerhout (BE); Lenaerts, Bart, 3001 Heverlee (BE); Van Soom, Bertram, 3010 Kessel-Lo (BE); Missotten, Bart M.A., 3020 Herent (BE); Saeys, Wouter, 1730 Asse (BE)
(74) Representative: CNH Industrial IP Department

(56) References cited:
- EP-B1- 1 402 768
- US-A- 5 083 976
- US-A1- 2007 233 416
- US-A1- 2021 144 917
- US-B2- 7 658 059
- SIEBALD HUBERTUS ET AL: "Real-Time Acoustic Monitoring of Cutting Blade Sharpness in Agricultural Machinery", IEEE/ASME TRANSACTIONS ON MECHATRONICS, IEEE SERVICE CENTER, PISCATAWAY, NJ, US, vol. 22, no. 6, 1 December 2017 (2017-12-01), pages 2411 - 2419, XP011674446, ISSN: 1083-4435, [retrieved on 20171212], DOI: 10.1109/TMECH.2017.2735542

## Description

### Field of the Invention

The present invention is related to agricultural harvesters, in particular to monitoring the condition of the cutting knives of a combine harvester.

### State of the art.

The knives of a combine harvester are part of a detachable header mounted at the front of the harvester. As the harvester advances through a field of crops, the crops are cut through a reciprocating motion of a knife bar relative to a set of stationary counterknives and subsequently collected by an auger or by moving belts towards the mid-section of the header. From there, harvested crops are drawn into the main body of the harvester which typically contains a threshing and cleaning arrangement for separating grains from residue plant material.

The condition of the knives has to be optimal in order to ensure the crop yield. Therefore it is important to monitor said condition and to replace damaged knives regularly. However a regular visual inspection is not the most efficient way of detecting knife damage quickly unless the inspection is done at uneconomically short intervals.

Systems have therefore been developed for detecting the knife condition during the operation of the harvester, and to alert the operator of potential damage so that the replacement of damaged knives can be done in a timely fashion without requiring unnecessarily frequent interruptions.

Such systems as they are known today are however not without a number of drawbacks. One known arrangement is described in US2021/0144917, in which a force sensor is incorporated in the drive train of the knives. A position sensor detects the stroke position of the knives, and the two signals are fed to a control unit for determining the knife condition.

A force sensor incorporated in the drive train is however not necessarily the best choice in terms of the sensitivity of the measurements and the capability of detecting and determining knife damage. Also, replacing such a force sensor is difficult as it requires interrupting the drive train.

H. Siebald et al. discuss in "Real-Time Acoustic Monitoring of Cutting Blade Sharpness in Agricultural Machinery" (in IEEE/ASME Transactions on Mechatronics, vol. 22, no. 6, pp. 2411-2419, Dec. 2017, doi: 10.1109/TMECH.2017.2735542) the measurement of structure-borne sound to monitor knife sharpness of knife drum and counter blade in a forage harvester.

### Summary of the invention

The invention is related to an agricultural header, to a harvester equipped with said header, and to a method as described in the appended claims. The present invention is thus related to a header for a combine harvester wherein the header comprises one or more vibration sensors mounted on a knife drive train of the header. Such a knife drive train is defined as an assembly of movable parts including a rotatable header drive shaft, a mechanical knife drive, a transmission for transferring the rotation of the drive shaft to the knife drive and a support member with a set of knives attached thereto, the member being coupled to the knife drive so as to undergo a reciprocating movement in a direction that is transverse to the forward direction of a harvester when the header is attached thereto. According to preferred embodiments, the one or more sensors are mounted on the support member and/or on the housing of the knife drive. The sensors are configured to measure the vibration in the direction of said reciprocating movement. The latter feature is not limited to sensors mounted strictly parallel to the direction of said movement, but includes sensors mounted at a slight inclination relative to said movement, which still allow to measure a signal that is representative of the vibrations in the direction of the reciprocating movement. According to embodiments of the invention, the one or more sensors are mounted so as to measure the vibration at an angle between 0 and 10° or between 0 and 5° relative to the direction of the reciprocating movement.

The sensors may include accelerometers or strain gauges. A type of accelerometer that is applicable in the invention is a knock sensor. The header further comprises a control unit connected to the one or more sensors.

The method of the invention comprises the steps of acquiring a vibration signal from one of the sensors, deriving one or more features from the signal, comparing the one or more features to one or more thresholds, deriving from said comparison information on the condition of the knives, and communicating said information regarding the condition of the knives to an operator. According to particular embodiments, the signal is sampled or re-sampled and filtered according to one or more specific filters, while the extracted features are chosen from a specific group including for example the mean or the standard deviation determined for each cycle of the reciprocating movement of the knives.

Acccording to an embodiment, the one or more thresholds applied for each feature consist of an upper control limit and a lower control limit and the condition of the knives is communicated as potentially damaged or damaged when at least one of said features is outside the range defined by said control limits.

The header and the method of the invention enable the monitoring of the condition of the knives using only vibration sensors mounted on an exterior surface of the header's knife drive train. This is done reliably even with standard sensors like a knock sensor or a strain gauge. The use of these sensors represents an improvement over the prior art in terms of versatility : vibration sensors can be applied in a larger number of locations along the header drive train. Also, these sensors are easier to replace than sensors applied in the art for a similar purpose. Specific embodiments of the method of the invention enable to detect potential damage to the knives and to classify the damage according to the degree of said damage.

### Brief description of the figures

Figure 1 is a schematic side view of a self-propelled combine harvester, indicating a number of components of the machine, as known in the art.
Figure 2 is a schematic top view of the harvester, showing only a number of components of the header which are relevant for the invention.
Figure 3 is a detail of one side of the header shown in Figure 2, including a number of sensors in accordance with an embodiment of the invention.
Figures 4a to 4d illustrate a typical signal acquired from a sensor of a header according to an embodiment of the invention, as well as signal processing steps performed on the signal in accordance with embodiments of the method of the invention.
Figures 5a to 5d illustrate the operation of four specific filters applicable in embodiments of the method of the invention.
Figure 6 illustrates an example of a signal that represents a potentially damaging impact on the knives of a harvester, and that enables to derive a classification of the damage resulting from said impact.

### Detailed description of preferred embodiments of the invention

Preferred embodiments will now be described with reference to the drawings. The detailed description is not limiting the scope of the invention, which is defined only by the appended claims.

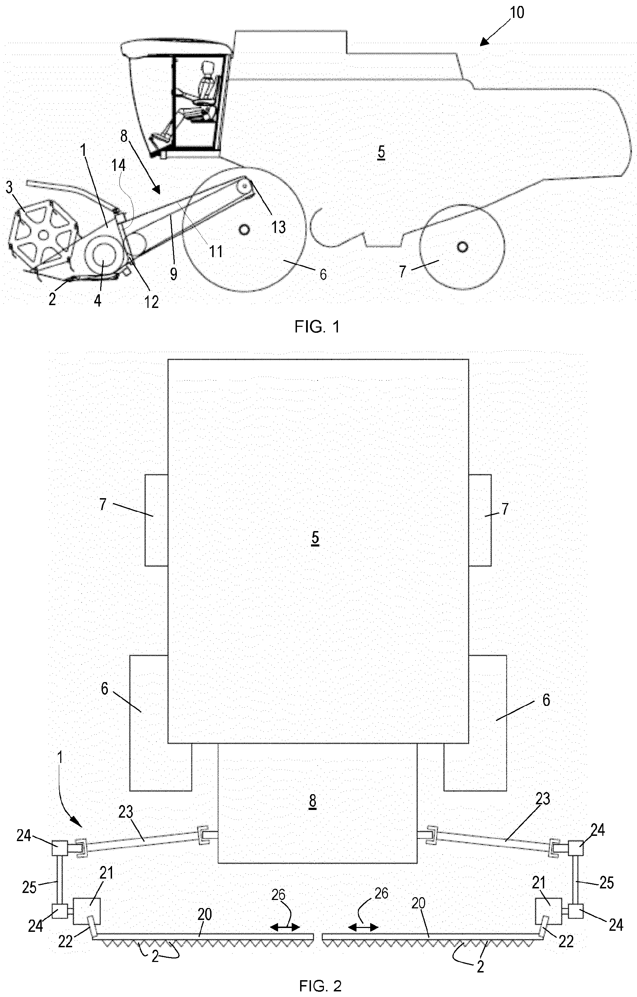

Figure 1 is a schematic image of a combine harvester 10 as known today, comprising a header 1 mounted at the front of the combine. The header comprises knives 2 maintained at a given height above ground level while the combine moves through a field of crops that are to be harvested. A rotating reel 3 guides the crops towards the knives 2. Cut crops are transported from both lateral sides of the header 1 towards a central area by an auger 4. Instead of an auger, a set of draper belts may perform this function. The main body 5 of the combine is supported by front and rear wheels 6 and 7 and comprises threshing and separation elements and a cleaning section generally known by the skilled reader and not depicted as such in Figure 1. From the central area of the header 1, crops are transported into the main body 5 of the combine by a feeder 8. The feeder 8 is inclined upwards from the header 1 towards the main body 5 and comprises moving belts 9 inside a feeder housing 11. The belts 9 transport the crops upwards, from an inlet section 12 of the feeder to an outlet section 13. At the front, the feeder comprises a cradle frame 14, onto which the header 1 is mounted and secured.

Figure 2 is a schematic top view of the harvester 10, showing only a number of components which are relevant for the invention, and primarily indicating the position of these components relative to the main body 5 of the harvester and to the feeder 8. The case is shown of a double cutting system having two sets of knives 2 driven from the two sides of the header 1, but the invention is applicable also to systems having a single set of knives. It is seen that each set of knives 2 is attached to a knifebar 20, coupled to a mechanical knife drive 21, which transforms the rotation of the drive's input axle into a reciprocating motion of an outlet member 22 coupled to the knife bar 20. Any known type of knife drive may be used in a header of the invention. Well known types of knife drives include a wobble box and a planetary drive. The rotation of the input axle of the knife drive is driven by a power take-off shaft 23 of the header and through a transmission that includes a set of gearboxes 24 and a transmission shaft 25. Alternatively the transmission could comprise pulleys coupled by a belt or sprockets coupled by a chain or a combination of various transmission types according to any configuration known in the art. The power take-off shafts 23 are rotatably coupled to a main driveline of the harvester in any manner known in the art, said main driveline being driven by a power source of the harvester, such as the main engine or a hydraulic motor.

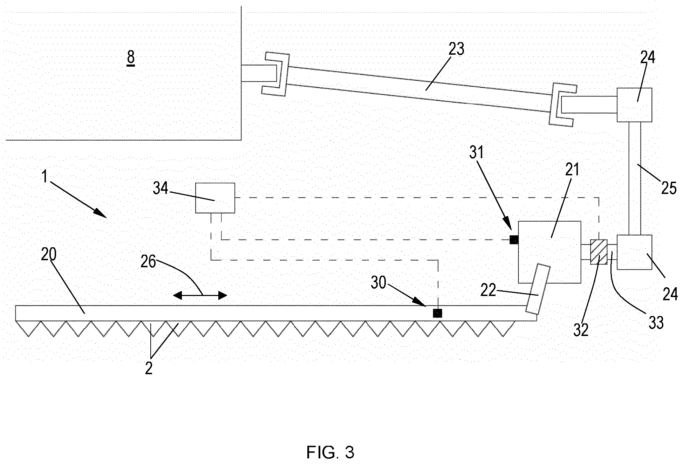

The knife drives 21 force the respective knife bars 20 to undergo a reciprocating movement perpendicular to the forward direction of the harvester, as indicated by the arrows 26 in Figure 2, so that the knives 2 move back and forth relative to a set of stationary counterknives (not shown), to thereby cut crop stalks at a given height from the ground. In the context of the present invention, a knife drive train of the header is defined as the sequence of movable components including the driveshaft 23, the transmission 24+25, the mechanical knife drive 21 and the knifebar 20 with the knives attached thereto. The header shown in Figure 2 therefore comprises two such knife drive trains. The invention will be described on the basis of Figure 3, showing only one of these two drive trains.

According to the invention, and as illustrated in Figure 3, the header knife drive train comprises one or more vibration sensors. In the embodiment shown in Figure 3, a first vibration sensor 30 is mounted on the knifebar 20 and a second vibration sensor 31 is mounted on the housing of the knife drive 21, which may for example be a wobble box. The sensors are mounted in such a way that they measure the vibration in the direction of the reciprocating movement of the knives 2. According to preferred embodiments, the sensor mounted on the knifebar 20 may be an accelerometer or a strain gauge, while the sensor mounted on the knife drive 21 is preferably an accelerometer. In the context of the present invention, piezo-electric accelerometers are the preferred choice. Any type of piezo-electric accelerometer may be used, however according to specific embodiments, the type of accelerometer used on the knife bar 20 or on the knife drive 21 is a knock sensor, which is a less expensive accelerometer designed for measuring the knocking phenomenon on internal combustion engines. The fact that the knife condition can be effectively monitored using such inexpensive sensors represents an unexpected advantage of these particular embodiments.

According to particular embodiments of the invention, the header further comprises a position sensor for measuring the position of the knives 2 during each cycle of the knives' reciprocating movement. As illustrated in Figure 3, this may be an incremental encoder 32 mounted on the input axle 33 of the knife drive 21. As known in the art, the encoder 32 produces a plurality of pulses per revolution of the input axle 33 and this pulse train can be used to relate the measured vibration signal to well-known angular positions of the input axle 33 and thereby to well-known positions of the knives 2 during each cycle of the reciprocating movement. Alternatively, a displacement sensor may be mounted above or below the knife bar 20 in order to detect the knife bar position. The displacement sensor is then configured to produce a given number of pulses (for example 4 pulses) at precisely known positions of the reciprocating knifebar 20. The encoder 32 generally produces a higher number of pulses and therefore enables a more accurate position monitoring of the knives. The invention is however not limited to the embodiments which include a position sensor. As will be explained later in this description, the method of the invention can be applied also without a position sensor, using only the signals obtained from the one or more vibration sensors.

As seen in Figure 3, the vibration sensors 30 and 31 and the position sensor 32 are connected to a control unit 34, symbolically represented in the image as part of the header 1. However, the control unit 34 may be physically incorporated in the main body 5 of the harvester. The dotted lines represent the connections through which signals are transmitted from the sensors 30,31 to the control unit 34. These connections may be wire connections or wireless connections, depending on the type of sensors used and on design aspects of the control unit which are within the general knowledge and therefore not described here in detail. What is characteristic to the invention is that the control unit is configured to receive the signals from the sensors and to monitor the condition of the knives 2 on the basis of said signals. This monitoring may include various aspects according to various embodiments of the method of the present invention as will be described hereafter.

Before describing the method however, it is recapitulated that a header and a harvester according to the invention are characterized by the presence of one or more vibration sensors in the header's knife drivetrain (preferably in all knife drivetrains if there is more than one), the sensors being mounted so as to measure vibration in the direction of the reciprocating knife movement. The term 'vibration sensor' as used in the present context includes any sensor that produces a signal that is representative of a vibration in said direction. This includes an accelerometer and also a strain gauge mounted on the knifebar, but it excludes for example a force sensor mounted between two rotating parts of the knife drivetrain, for example a force sensor mounted inside a wobble box. Vibration sensors mounted such as to measure the vibration in the direction of the reciprocating movement are necessarily mounted on exterior surfaces of the drive train, and are therefore more easily replaceable than such incorporated force sensors.

In the broadest sense, the method of the invention comprises the steps of:
- receiving a vibration signal from one of the sensors mounted on a knife drive train of a header according to the invention, acquired during a monitoring interval, the monitoring interval comprising a plurality of cycles of the reciprocating movement. A monitoring interval may have any given duration, for example the time required to harvest one or two linear stretches of a field,
- deriving one or more features from the signal. As explained further in this description and in accordance with specific embodiments, this may involve sampling or resampling the signals and filtering the signals according to a specifically designed filter. Sampling is done on an analog signal, while resampling is done on a digital signal or on a previously sampled analog signal. According to preferred embodiments, sampling or resampling is done in such a manner as to obtain the same number of samples in each cycle of a series of consecutive cycles of the reciprocating movement performed during the monitoring interval,
- comparing the one or more features to one or more thresholds.

Determination the thresholds may involve a statistical analysis of a set of test data, as also explained further in this description.
- deriving from said comparison information on the condition of the knives,
- communicating said information regarding the condition of the knives to an operator. This will preferably involve a notification on a screen in the operator's cabin, alerting the operator of potential knife damage having taken place. According to preferred embodiments, an indication of the severity of the damage may be given (see also further in this description), possibly by using colour codes for indicating the knife condition. An auditive alert could also be given upon the detection of potential knife damage.

Details of the method of the invention will now be described without any intention of limiting the protection scope, but rather as a way of describing specific embodiments and/or as a possible way of bringing the invention into practice.

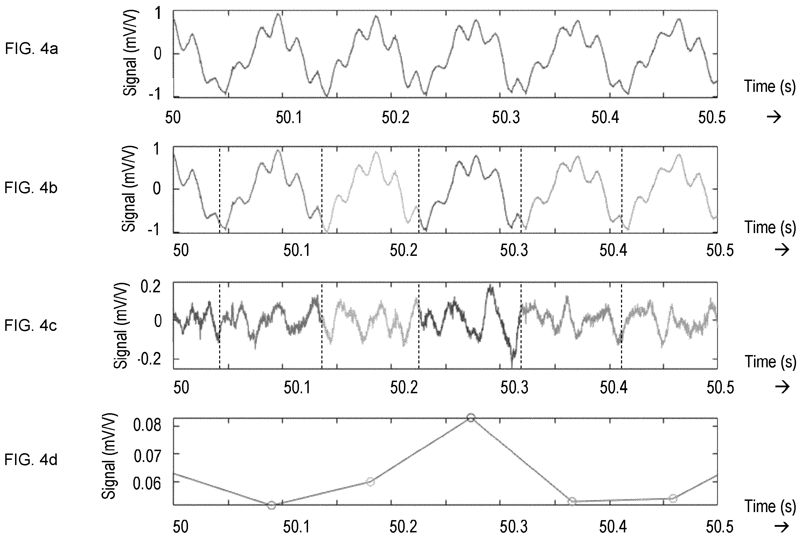

Figure 4a shows a signal obtained from a strain gauge attached to the knife bar 20 during a test performed by the inventors. The graph shows the signal as a function of time during a little over 5 cycles of the reciprocating movement of the knives 2. The signal is a digital signal obtained at a sample rate of 10kHz. It was found that in order to extract features from the signal which are representative of the condition of the knives, it was advantageous to perform the following steps.

First the signal is re-sampled by angular resampling in order to obtain the same number of samples for each cycle. This is done because the knife frequency is not perfectly constant so that the signal does not have the exact same number of samples per cycle. The angular resampling requires the knowledge of the knife position, which may be obtained from a position sensor, for example an incremental encoder 32 as illustrated in Figure 3, having a resolution of several thousands of pulses per revolution of the input axle 33 and thus per knife cycle, or an inductive displacement sensor used as a tachometer, and producing for example four pulses per knife cycle. Resampling without the help of a position signal was also proven to be possible, but this aspect will be described later in this description. The re-sampled signal is shown in Figure 4b, the vertical lines showing the boundaries between the re-sampled cycles, i.e. each interval between two consecutive lines has the same number of samples.

Figure 4c shows the resampled signal after filtering. According to preferred embodiments, filtering is applied in order to remove the periodic component caused by the knife motion and if necessary to remove high frequency noise, as neither the noise nor the amplitude of the periodic component is representative of the knife condition.

The invention is not limited to any specific filter design, nor to the use of filtering as such. Feature extraction (see further) may be done on the basis of the non-filtered signal according to some embodiments. Also, a standard high-pass filter can be applied, configured to remove the knife frequency from the signal. Any of the filters described in this disclosure may be combined with a standard low pass filter for removing high-frequency noise above a given frequency.

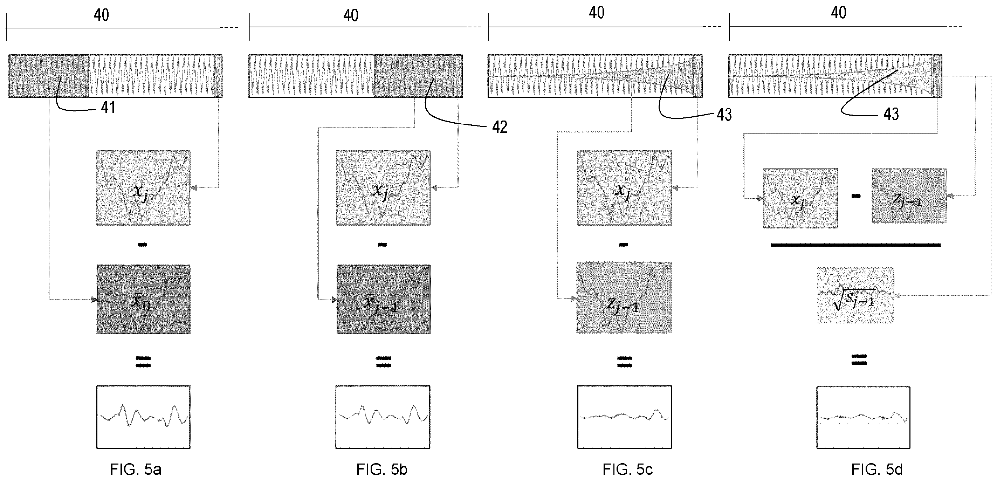

However, four specific filters were developed in the framework of the invention, and have been proven to be particularly effective in given circumstances or in combination with other elements of the method. Figures 5a to 5d illustrate the respective filters. In each case, a cycle of the signal is filtered by subtracting from each sample of the cycle a given value equal to or based on an average. The applicable formulas and the names given by the inventors to the four filters are described in the following paragraphs.

Illustrated in Figure 5a, the fixed synchronous average residual (FSAR) filter calculates a synchronous average *x̅*₀ of the knife cycle signal in a fixed region 41 consisting of *w* knife cycles at the start of a monitoring interval 40. The monitoring interval 40 is illustrated up to the j^{th} cycle xⱼ of the interval. The region 41 includes w cycles xᵢ with i = 1 ... w. The denominations 'xᵢ' and 'xⱼ' represent one-dimensional matrices containing respectively the samples of the i^{th} and j^{th} cycles of the interval 40.

The synchronous average *x̅*₀ is calculated as : ${\overline{x}}_{0} = \frac{{x}_{1} + … + {x}_{w}}{w}$ Filtering the j^{th} cycle *xⱼ* is realized by subtracting the average *x̅*₀ from *xⱼ,* which results in the FSAR-filter residual : ${r}_{j} = {x}_{j} - {\overline{x}}_{0}$ The FSAR filter thereby effectively removes the periodic component of the signal.

The moving synchronous average residual (MSAR) filter illustrated in Figure 5b again calculates a synchronous average in a region 42 consisting of w cycles, but now the region 42 is adjusted for every new cycle, in the sense that it consists of the w cycles immediately preceding the j^{th} cycle xⱼ. In this way, the average represents the current knife-crop interaction. The MSAR residual is calculated as : ${r}_{j} = {x}_{j} - {\overline{x}}_{j - 1}$ wherein : ${\overline{x}}_{j - 1} = \frac{{x}_{j - w} + … + {x}_{j - 1}}{w}$ The MSAR filter has the advantage that not only the periodic component is removed, but also any low frequent component due to changing crop conditions.

For the FSAR and MSAR filters, the number of cycles *w* in the regions 41 and 42 can be chosen arbitrarily or by training on a set of acquired data, for example by searching the value that minimizes the mean residual of a series of monitoring intervals. The maximal value of w may be restricted to limit the moving window to a given value, for example 3 seconds.

The exponentially weighted moving synchronous average residual (EWMSAR) filter illustrated in Figure 5c uses a moving average zᵢ that places more weight on the most recent data points. The average is calculated in a window 43 that starts at the beginning of the monitoring interval 40 and that immediately precedes the j^{th} cycle *xⱼ*. The moving average is calculated as follows ${z}_{i} = {λx}_{i} + \left(1-λ\right) {z}_{i - 1}$ wherein *z*₁ = *x*₁ and wherein λ is a value between 0 and 1 defined as a forgetting factor, as it determines the weight of each new cycle sample *xᵢ* compared to the previous exponentially weighted moving average *z*_{*i*-1}. The EWMSAR-filter residual is calculated as : ${r}_{j} = {x}_{j} - {z}_{j - 1}$ The forgetting factor λ determines the rate at which the weight of preceding cycles decreases, i.e. are 'forgotten', in the calculation of the moving average. This principle is symbolized by the shape of the window 43 in Figure 5c. Because of this characteristic, the EWMSAR filter has the advantage of a faster adaptation to new conditions. The forgetting factor *λ* can be determined by minimizing the mean residual on a training set of data.

The fourth filter (illustrated in Figure 5d) is the exponentially weighted moving synchronous normalised residual (EWMSNR) filter, which acts similarly to the EWMSAR-filter, but additionally rescales the points inside the EWMSAR-filter residual based on a moving variance: ${s}_{i} = λ {\left({x}_{i}-{z}_{i - 1}\right)}^{2} + \left(1-λ\right) {s}_{i - 1}$ and with *s*₁ = (*x*₂ - *z*₁)²
Where, as for the EWMSAR-filter, ${z}_{i} = {λx}_{i} + \left(1-λ\right) {z}_{i - 1} , with {z}_{1} = {x}_{1}$ and wherein the EWSNR-filter residual is as follows : ${r}_{j} = \frac{{x}_{j} - {z}_{j - 1}}{\sqrt{{s}_{j - 1}}}$ The EWSNR filter thereby corrects for amplitude differences between the different positions within a cycle sample. This guarantees an equal weight for each of the knife positions within the knife cycle sample during the feature calculation.

Said feature calculation is the next step of the method, and is applied to the filtered signal, or if no filter is applied, to the sampled or resampled but non-filtered signal. Returning to Figure 4d, it is illustrated that for each filtered cycle, a value is calculated. According to preferred embodiments, said value is one of the following, calculated (for the case illustrated) from the samples of the filtered cycles shown in Figure 4c :
- mean of the samples of a cycle,
- standard deviation of the samples of a cycle,
- absolute maximum of the samples of a cycle, i.e. the maximum in terms of the absolute value of the samples.

The condition of the knives is then evaluated by comparing for each cycle the feature value to one or more thresholds. According to preferred embodiments, each feature is compared to an upper control limit and to a lower control limit, and it is concluded that damage or potential damage has occurred to the knives when a feature is outside the range defined by the control limits.

From tests performed within the framework of the invention, a number of combinations have been proven to be particularly effective in terms of accurately detecting potentially damaging events. These are the following, each combination being defined as a sequence of 'sensor type and location', filter, feature :
- strain gauge on knifebar, EWMSNR, standard deviation or absolute maximum,
- piezo-electric accelerometer on knife bar, EWMSNR, absolute maximum The piezo-electric accelerometer in the latter case is a high-end accelerometer. In tests performed by the inventors, a triaxial accelerometer of the type PCB356A02 from PCB Piezotronics^{®} was mounted so that one measurement axis was parallel to the knifebar and, wherein only the signal was used that represents vibrations in the direction of the knife motion,
- Knock sensor on the knife bar, FSAR, MSAR or EWMSAR, standard deviation,
- Knock sensor on the knifedrive, EWMSNR, standard deviation,
For the last two cases, the knock sensor may be a standard available knock sensor type. The sensor used during the tests was a KS4-R from Bosch^{®}.

The determination of the thresholds can be done in various ways and the invention is not limited to any particular approach. One possible way that has been proven to lead to good results is to apply statistical process control (SPC), which is a methodology known as such and therefore not described here in detail. This approach involves two sets of test data. The first set consists of monitoring intervals labelled as 'in control' (IC), of which it is known that no detrimental impacts on the knives have occurred. The second set consists of monitoring intervals of which at least some intervals comprise known 'events', i.e. impacts which are known to be potentially damaging to the knives. Such test data can be obtained by doing harvesting runs in a field wherein obstacles have been planted at predefined locations, such as metal rods or the like. The thresholds, such as the upper and lower control limit may be derived for example from the empirical distribution of the features extracted from the IC data. The event data of the second data set, which include spikes in the obtained signals when the knives encounter the planted obstacles, can be used to test the validity of the control limits derived from the IC date, and possibly to further update said control limits. Suitable learning algorithms known in the art may be applied for deriving the thresholds and other parameters of the method from such sets of test data.

The test data of the first and the second set can also be used for training the 4 specific filters described above, for example for determining the optimal number of cycles w in the windows 41, 42 and 43 and the optimal value of the forgetting factor λ in the EWMSAR and EWMSNR filters.

During a harvesting operation, the method of the invention takes place essentially in real time, which may be described as follows on the basis of a given signal, for example the signal obtained from an accelerometer mounted on a wobble box used as the knife drive 21. The following steps are valid for an embodiment of the method that uses a position sensor, for example an encoder, and wherein MSAR filtering is applied before extracting the mean value for a number of consecutive cycles of the knives.

The signal is acquired together with the signal from the encoder during the full duration of a monitoring interval (for example a harvesting run of several minutes along a straight stretch of the field). The vibration signal is resampled by angular resampling with the help of the encoder signal. On the re-sampled signal, MSAR filtering is applied on each cycle following the passage of a first window 42 at the start of the monitoring interval. After said first window, the average is based on a moving window 42 immediately preceding the cycle that is to be filtered. The mean value of the filtered cycle is compared to the upper and lower control limits. If the mean value exceeds the range defined by the control limits, the operator of the harvester is alerted that the knives are potentially damaged. The extraction of the features and the comparison to the control limits takes place essentially in real time : as the signal is acquired, consecutive cycles of the signal are processed and evaluated one by one quasi-immediately upon acquisition of the cycles, so that an alert may be given as soon as a potentially damaging impact has occurred.

According to particular embodiments, a form of 'smart filtering' is applied to the acquired signals. This means that either one of the 'moving average' filters described above is used, i.e. MSAR, EWMSAR or EWMSNR, wherein however the moving average is only based on the window immediately preceding a cycle when no potentially damaging event has been detected in a given number of cycles prior to that cycle. When such an event has been detected in a given cycle, that cycle is thereafter excluded from the calculation of the moving average. For example in the case of the MSAR filter with a window length w equal to 10 cycles : if the event is detected in the 20^{th} cycle, the average used for filtering the 21^{st} cycle is taken from cycles 10-19, i.e. the average is not updated for the first cycle following the cycle in which the event took place. For the 22^{nd} cycle, the average is taken from cycles 11-19 and 21. For the 23d cycle, the average is taken from cycles 12-19, 21 and 22, and so on until cycle 31, at which point the average is again taken from the 10 preceding cycles 21-30.

According to an embodiment of the method, in addition to detecting a potentially damaging impact on the knives, the severity of the actually occurring damage is classified in one of a number of classes. Preferably two classes are applied, which may be called 'no or limited damage' and 'severe damage'. The first class refers to impacts which cause essentially no damage or only limited damage, so that immediate replacement of the knife is not required. The second class refers to impacts which cause severe damage, i.e. damage which requires replacement of the impacted knife at the earliest convenience.

The limit between the classes may be decided on the basis of test data, i.e. a number of measured impact signals and the effective damage resulting from the measured impacts. Various classifier algorithms are available in the art for performing such a classification effort on the basis of a set of data, and the invention may use any suitable algorithm.

The classification, i.e. assessing whether an impact is to be classified into the 'no/limited damage' class or the 'severe damage' class, can be based on the value of the feature or features that were used to detect the impact, for example the mean or standard deviation of a cycle during which an impact occurs.

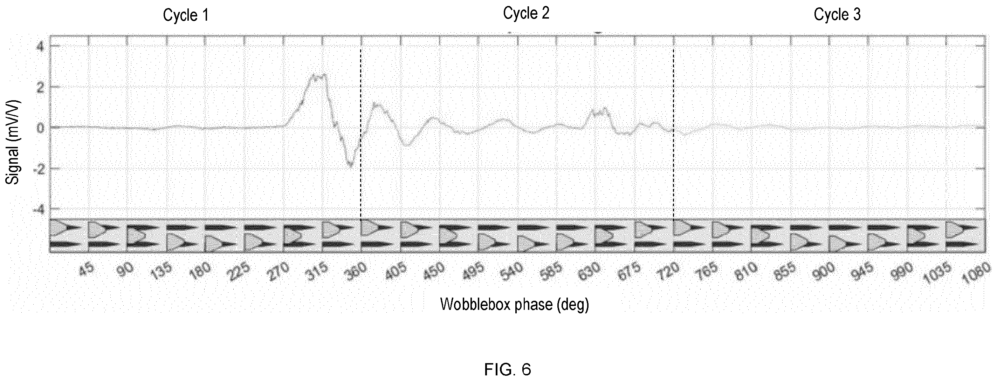

According to specific embodiments however, the classification is not based on the extracted features, but on an additional analysis of multiple cycles : the cycle in which the impact occurs and a number of subsequent cycles, for example two cycles, so that the total of analysed cycles is three. Figure 6 is an example of a signal extending over three cycles. The position of the knife is indicated along the x-axis, which expresses the phase of the reciprocating movement actuated by the knife drive (in the test in question this was a wobble box). The signal is obtained from a strain gauge mounted on the knifebar 20. The signal shown is not the raw signal, but the signal after filtering out the periodic components, hence the flat profile at the beginning and end of the graph. The impact profile is thereby clearly visible : the impact starts at about 270° in cycle 1, when the knife is positioned between two counterknives. The effect of the impact is measurable throughout cycles 2 and 3.

According to said specific embodiments, the samples of these three cycles, i.e. the measured amplitudes of these samples serve as the basis for classifying the impact. In practice this can be a very large number of samples, for example a few thousand, so that a classifier algorithm may have difficulty classifying the impacts of a test run taking into account all the samples.

It was found however that a very effective classification is possible on the basis of a reduced number of representative samples, determined by a statistical analysis. Using a principal component analysis (PCA) for example, it was possible to reduce the number of representative samples to about 12 for the example shown in Figure 6. These samples obtained from a number of impacts measured during test runs were then classified using a standard classifier algorithm, which led to a probability of 70% or higher, of correctly assessing an impact into the 'severe damage' class.

This probability reached about 85% by classifying the PCA-reduced indicators derived from the 3-cycle strain gauge signal using a non-linear support vector machine (SVM) classifier algorithm. The invention is however not limited to this particular approach. Other methods for reducing the number of indicative samples include for example auto-encoding. Besides non-linear SVM, other suitable classifier algorithms which can be used in the invention include discriminant analysis, naive bayes and k-nearest neighbour.

According to an embodiment, the method further comprises a step of visually verifying the condition of the knives after a harvesting run, i.e when the harvester is stopped, and updating one or more parameters of the method when the method is applied during a next harvesting run. The inspection may be done by the operator in between harvesting runs or after a series of runs. The parameter update may involve an update of the one or more thresholds and/or of the features extracted from the signals. However, other parameters may be updated as well, for example the type of filter that is applied, or parameters of the filters themselves, for example the number of cycles w in the windows 41, 42 and 43, or the forgetting factor λ applied in the EWMSAR or EWMSNR filters. In practice, visually determined knife damage may be registered in the control unit 34 by the operator, for example through a user interface that presents an image of the knife bar, allowing the operator to indicate which knives are damaged and how severe the damage is. This information is then used by the control unit 34 to re-calculate one or more of the parameters, based on a learning algorithm that may be similar to the learning algorithm used during the initial determination of the parameters on the basis of a set of test data.

According to an embodiment already referred to above, the header does not include a position sensor and/or the method includes the step of deriving the position of the knives and performing angular resampling based on a signal produced by one of the sensors mounted on the header drive train, without the help of a position-related signal.

This can be done in various ways, at least some of which are within the knowledge of a person skilled in the art of signal processing. One possible approach includes one or more of the following actions, performed on a raw sampled time signal, for example sampled at a sampling frequency of 10kHz :
- removing noise from the signal until a clearly repetitive signal is obtained, for example having a signal profile as shown in Figure 4a,
- detecting subsequent maxima and minima of the signal,
- if necessary, smoothing the signal in the areas around the maxima and minima in order to obtain clearly defined maxima and minima,
- determining the number of samples between the detected maxima and minima and comparing said number to the theoretical number of samples if the knife frequency is constant
- adjusting the signal so that the gap between the minima and maxima is constant,
- defining a tachopulse at the sample corresponding to the mean of a subsequent minimum and maximum,
- using said tachopulse to perform angular resampling of the signal so that each cycle has the same number of samples.

## Claims

1. A header (1) for an agricultural combine harvester (10), the header comprising at least one knife drivetrain that includes :
- a rotatable drive shaft (23) configured to be coupled to a power shaft of an agricultural combine harvester when the header is operationally coupled thereto,
- a mechanical drive (21) having a housing and a rotatable input axle (33), the mechanical drive being configured to transform the rotation of said input axle into a reciprocating motion of an outlet member (22) of the mechanical drive,
- a support member (20) with a set of knives (2) attached thereto, wherein the support member is coupled to said outlet member (22) of the mechanical drive (21) so that the knives (2) undergo a reciprocating cutting movement, **characterised in that** :
- the knife drivetrain comprises one or more sensors (30,31) configured to measure the vibration of one or more components of the drivetrain in the direction of the movement of the reciprocating knives (2),
- the sensors are coupled to a control unit (34) that is included in the header (1) or the sensors are configured to be coupled to a control unit that is part of the combine harvester (10), wherein the control unit is configured to monitor the condition of the knives (2) on the basis of signals received from the one or more sensors (30,31), and
- wherein the one or more sensors include one or more of the following :
∘ an accelerometer (30) mounted on the support member (20),
∘ an accelerometer (31) mounted on the housing of the mechanical drive (21),
∘ a strain gauge mounted on the support member (20).

2. The header according to claim 1, wherein the accelerometer mounted on the support member (20) and/or on the housing of the mechanical drive (21) is a knock sensor.

3. The header according to any one of the preceding claims, wherein the header (1) further comprises a sensor suitable for determining the position of the knives (2) during each cycle of the reciprocating movement of said knives, wherein said sensor is an encoder (32) mounted on the input axle (33) of the mechanical drive, or a displacement sensor configured to measure the displacement of the support member (20).

4. An agricultural combine harvester (10) comprising a header (1) according to any one of the preceding claims.

5. A method for monitoring the condition of the knives of a header according to any one claims 1 to 4, the method comprising the steps of :
- receiving a vibration signal from one of the sensors (30,31), acquired during a monitoring interval, the monitoring interval comprising a plurality of cycles of the reciprocating movement,
- deriving one or more features from the signal,
- comparing the one or more features to one or more thresholds,
- deriving from said comparison information on the condition of the knives (2), said information including potential damage to one or more of the knives when a feature has been found to exceed one or more of the thresholds,
- communicating said information regarding the condition of the knives to an operator.

6. The method according to claim 5, wherein :
- the signal is sampled or resampled in such a manner as to obtain the same number of samples in each cycle of a series of consecutive cycles of the reciprocating movement performed during the monitoring interval, each sample having a value that is representative of the vibration measured by the sensor when the support member is in well-defined consecutive positions during the cycle of the reciprocating movement,
- for each of the monitored cycles, one or more of said features are extracted from the samples of said cycle,
- said features are compared to said one or more thresholds.

7. The method according to claim 6, wherein the sampling or resampling is done on the basis of a separate signal obtained by a dedicated sensor, the separate signal representing the position of the support member (20) during each cycle.

8. The method according to claim 6, wherein the position of the support member during each cycle is derived from the signal itself, and wherein the sampling or resampling is done on the basis of the position of the support member as derived from the signal.

9. The method according to any one of claims 6 to 8, wherein prior to the extraction of the one or more features, the signal is filtered by a filter that removes at least the frequency of the reciprocating movement of the support member (20).

10. The method according to claim 9, wherein the applied filter is one of the four following filters, named respectively :
- fixed synchronous average residual (FSAR)
- moving synchronous average residual (MSAR)
- exponentially weighted moving synchronous average residual (EWMSAR)
- exponentially weighted moving synchronous normalised residual (EWMSNR)
wherein in each case an average value is subtracted from the samples of the j^{th} cycle of the monitoring interval (40), said samples forming a one-dimensional matrix xⱼ containing all the samples of the j^{th} cycle, to arrive at a residual filtered sample rⱼ, and wherein said average is calculated as follows in the four cases :
- for the FSAR, the average is the average of a fixed number of cycles acquired at the beginning of the monitoring interval,
- for the MSAR, the average is the average of a fixed number of cycles acquired immediately before the j^{th} cycle,
- for the EWMSAR and the EWMSNR, a weighted average is calculated as *zᵢ* = *λxᵢ +* (1 - *λ*)*z*_{*i*-1} in a window (43) starting at the beginning of the monitoring interval (40) andimmediately preceding the j^{th} cycle, with z₁ = x₁, with λ a predefined value between 0 and 1, and wherein the residual rⱼ is calculated as :
∘${r}_{j} = {x}_{j} - {z}_{j - 1}$ for the EWMSAR,
∘${r}_{j} = \frac{{x}_{j} - {z}_{j - 1}}{\sqrt{{s}_{j - 1}}}$ for the EWMSNR, with ${s}_{i} = λ {\left({x}_{i}-{z}_{i - 1}\right)}^{2} + \left(1-λ\right) {s}_{i - 1} ,$ and with *s*₁ = (*x*₂ - *z*₁)².

11. The method according to claim 10, wherein either one of the MSAR, EWMSAR and EWMSNR filters is applied, and wherein, if a potentially damaging event is detected in a cycle, said cycle is excluded from the calculation of the average applied for filtering the subsequent cycles.

12. The method according to any one of claims 5 to 11, wherein said one or more features include one or more of the following :
- mean of the samples of a cycle,
- standard deviation of the samples of a cycle,
- absolute maximum of the samples of a cycle.

13. The method according to any one of claims 5 to 12, further comprising the following steps :
- after one or more monitoring intervals, the knives are inspected by visual inspection,
- the visually detected condition of the knives is compared to the condition communicated by said method according to any one of claims 6 to 13,
- on the basis of said comparison, adjustments are made to one or more parameters applied in said preceding steps, so that one or more adjusted parameters are applied in subsequent executions of said method according to any one of claims 6 to 13.

14. The method according to any one of claims 5 to 13, wherein said information regarding the condition of the knives comprises a classification of said condition into two or more classes, said classes being related to different degrees of damage to one or more of the knives.

15. The method according to claim 14 combined with claim 6, wherein said classification is made on the basis of the cycle during which a potentially damaging event is detected and on at least one of the cycles immediately following said cycle, and wherein the classification is made on the basis of a number of representative samples within said group of cycles.

## Patentansprüche

1. Schneidwerk (1) für einen landwirtschaftlichen Mähdrescher (10), wobei das Schneidwerk mindestens einen Messerantriebsstrang umfasst, der Folgendes einschließt:
- eine drehbare Antriebswelle (23), die dazu ausgebildet ist, an eine Leistungswelle eines landwirtschaftlichen Mähdreschers gekoppelt zu werden, wenn das Schneidwerk betriebswirksam daran gekoppelt ist,
- einen mechanischen Antrieb (21) mit einem Gehäuse und einer drehbaren Eingangswelle (33), wobei der mechanische Antrieb dazu eingerichtet ist, die Drehung der Eingangswelle in eine Hin- und Herbewegung eines Abtriebselements (22) des mechanischen Antriebs umzuwandeln,
- ein Trägerelement (20) mit einem daran befestigten Satz von Messern (2), wobei das Trägerelement an das Abtriebselement (22) des mechanischen Antriebs (21) gekoppelt ist, sodass die Messer (2) eine hin- und hergehende schneidende Bewegung ausführen,
**dadurch gekennzeichnet, dass:**
- der Messerantriebsstrang einen oder mehrere Sensoren (30, 31) umfasst, die konfiguriert sind, um die Vibration einer oder mehrerer Komponenten des Antriebsstrangs in Richtung der Bewegung der hin- und hergehenden Messer (2) zu messen,
- die Sensoren an eine Steuereinheit (34) gekoppelt sind, die in dem Schneidwerk (1) enthalten ist, oder die Sensoren konfiguriert sind, um an eine Steuereinheit gekoppelt zu werden, die Teil des Mähdreschers (10) ist, wobei die Steuereinheit konfiguriert ist, den Zustand der Messer (2) auf der Basis von Signalen zu überwachen, die von dem einen oder den mehreren Sensoren (30, 31) empfangen werden, und
- wobei der eine oder die mehreren Sensoren eines oder mehrere der Folgenden einschließen:
∘ einen an dem Trägerelement (20) angebrachten Beschleunigungsmesser (30),
∘ einen an dem Gehäuse des mechanischen Antriebs (21) angebrachten Beschleunigungsmesser (31),
∘ einen an dem Trägerelement (20) angebrachten Dehnungsmessstreifen.

2. Schneidwerk nach Anspruch 1, wobei der an dem Trägerelement (20) und/oder an dem Gehäuse des mechanischen Antriebs (21) angebrachte Beschleunigungsmesser ein Klopfsensor ist.

3. Schneidwerk nach einem der vorhergehenden Ansprüche, wobei das Schneidwerk (1) ferner einen Sensor umfasst, der geeignet ist, die Position der Messer (2) während jedes Zyklus der hin- und hergehenden Bewegung der Messer zu bestimmen, wobei der Sensor ein an der Eingangswelle (33) des mechanischen Antriebs angebrachter Encoder (32) oder ein Wegsensor ist, der konfiguriert ist, um die Verschiebung des Trägerelements (20) zu messen.

4. Landwirtschaftlicher Mähdrescher (10), umfassend ein Schneidwerk (1) nach einem der vorhergehenden Ansprüche.

5. Verfahren zur Überwachung des Zustands der Messer eines Schneidwerks nach einem der Ansprüche 1 bis 4, das Verfahren umfassend die Schritte:
- Empfangen eines Vibrationssignals von einem der Sensoren (30, 31), das während eines Überwachungsintervalls erfasst wurde, wobei das Überwachungsintervall eine Vielzahl von Zyklen der hin- und hergehenden Bewegung umfasst,
- Ableiten eines oder mehrerer Merkmale aus dem Signal,
- Vergleichen des einen oder der mehreren Merkmale mit einem oder mehreren Schwellenwerten,
- Ableiten von Informationen über den Zustand der Messer (2) aus dem Vergleich, wobei die Informationen eine mögliche Beschädigung eines oder mehrerer der Messer umfassen, wenn festgestellt wurde, dass ein Merkmal einen oder mehrere der Schwellenwerte überschreitet,
- Übermitteln der Informationen bezüglich des Zustands der Messer an einen Bediener.

6. Verfahren nach Anspruch 5, wobei:
- das Signal derart abgetastet oder neu abgetastet wird, dass die gleiche Anzahl von Abtastwerten in jedem Zyklus einer Reihe von aufeinanderfolgenden Zyklen der während des Überwachungsintervalls durchgeführten hin- und hergehenden Bewegung erhalten wird, wobei jeder Abtastwert einen Wert aufweist, der für die von dem Sensor gemessene Vibration repräsentativ ist, wenn sich das Trägerelement während des Zyklus der hin- und hergehenden Bewegung in wohldefinierten aufeinanderfolgenden Positionen befindet,
- für jeden der überwachten Zyklen eines oder mehrere der Merkmale aus den Abtastwerten des genannten Zyklus extrahiert werden,
- die Merkmale mit dem einen oder den mehreren Schwellenwerten verglichen werden.

7. Verfahren nach Anspruch 6, wobei die Abtastung oder Neuabtastung auf der Basis eines separaten Signals erfolgt, das durch einen dedizierten Sensor erhalten wird, wobei das separate Signal die Position des Trägerelements (20) während jedes Zyklus darstellt.

8. Verfahren nach Anspruch 6, worin die Position des Trägerelements während jedes Zyklus aus dem Signal selbst abgeleitet wird, und wobei die Abtastung oder Neuabtastung auf der Basis der aus dem Signal abgeleiteten Position des Trägerelements erfolgt.

9. Verfahren nach einem der Ansprüche 6 bis 8, wobei vor der Extraktion des einen oder der mehreren Merkmale das Signal durch ein Filter gefiltert wird, das zumindest die Frequenz der hin- und hergehenden Bewegung des Trägerelements (20) entfernt.

10. Verfahren nach Anspruch 9, wobei das angewendete Filter eines der vier folgenden Filter ist, jeweils benannt:
- festes synchronisiertes durchschnittliches Residuum (fixed synchronous average residual, FSAR)
- gleitendes synchronisiertes durchschnittliches Residuum (moving synchronous average residual, MSAR)
- exponentiell gewichtetes synchronisiertes durchschnittliches Residuum (exponentially weighted moving synchronous average residual, EWMSAR)
- exponentiell gewichtetes gleitendes synchronisiertes normiertes Residuum (exponentially weighted moving synchronous normalised residual, EWMSNR) wobei jeweils ein Durchschnittswert von den Abtastwerten des j-ten Zyklus des Überwachungsintervalls (40) subtrahiert wird, wobei die Abtastwerte eine eindimensionale Matrix Xj bilden, die alle Abtastwerte des j-ten Zyklus enthält, um einen gefilterten Restabtastwert q zu erhalten, und wobei der Durchschnitt in den vier Fällen wie folgt berechnet wird:
- für FSAR ist der Durchschnitt der Durchschnitt einer festen Anzahl von Zyklen, die zu Beginn des Überwachungsintervalls erfasst werden,
- für das MSAR ist der Durchschnitt der Durchschnitt einer festen Anzahl von Zyklen, die unmittelbar vor dem j-ten Zyklus erfasst wurden,
- für EWMSAR und EWMSNR wird ein gewichteter Durchschnitt berechnet als *zᵢ* = *λxᵢ* + (1 - *λ*)*z*ᵢ₋₁ in einem Fenster (43), das am Anfang des Überwachungsintervalls (40) beginnt und dem j-ten Zyklus unmittelbar vorausgeht, wobei z₁ = x₁, wobei λ ein vorgegebener Wert zwischen 0 und 1 ist, und wobei das Residuum rⱼ berechnet wird als:
∘${r}_{j} = {x}_{j} - {z}_{j - 1}$ für EWMSAR,
∘${r}_{j} = \frac{{x}_{j} - {z}_{j - 1}}{\sqrt{{s}_{j - 1}}}$ für EWMSNR, mit ${s}_{i} = λ {\left({x}_{i}-{z}_{i - 1}\right)}^{2} + \left(1-λ\right) {s}_{i - 1} ,$ und mit s₁ = (*x*₂ - *z*₁)².

11. Verfahren nach Anspruch 10, wobei entweder eines von dem MSAR-, EWMSAR- und EWMSNR-Filter angewendet wird, und wobei, wenn ein potenziell schädigendes Ereignis in einem Zyklus erkannt wird, dieser Zyklus von der Berechnung des Durchschnitts ausgeschlossen wird, der für die Filterung der nachfolgenden Zyklen angewendet wird.

12. Verfahren nach einem der Ansprüche 5 bis 11, wobei das eine oder die mehreren Merkmale eines oder mehrere der Folgenden einschließen:
- Mittelwert der Abtastwerte eines Zyklus,
- Standardabweichung der Abtastwerte eines Zyklus,
- absolutes Maximum der Abtastwerte eines Zyklus.

13. Verfahren nach einem der Ansprüche 5 bis 12, ferner umfassend die folgenden Schritte :
- nach einem oder mehreren Überwachungsintervallen werden die Messer durch Sichtkontrolle geprüft,
- der visuell erfasste Zustand der Messer wird mit dem durch das Verfahren nach einem der Ansprüche 6 bis 13 übermittelten Zustand verglichen,
- auf der Grundlage des Vergleichs werden Anpassungen an einem oder mehreren in den vorhergehenden Schritten angewendeten Parametern vorgenommen, so dass ein oder mehrere angepasste Parameter bei nachfolgenden Ausführungen des Verfahrens nach einem der Ansprüche 6 bis 13 angewendet werden.

14. Verfahren nach einem der Ansprüche 5 bis 13, wobei die Informationen bezüglich des Zustands der Messer eine Klassifizierung des Zustands in zwei oder mehr Klassen umfasst, wobei sich die Klassen auf unterschiedliche Beschädigungsgrade an einem oder mehreren der Messer beziehen.

15. Verfahren nach Anspruch 14 kombiniert mit Anspruch 6, wobei die Klassifizierung auf der Basis des Zyklus, während dessen ein potenziell schädigendes Ereignis erkannt wird, und auf mindestens einem der Zyklen, die unmittelbar auf den Zyklus folgen, erfolgt, und wobei die Klassifizierung auf der Basis einer Anzahl von repräsentativen Abtastwerten innerhalb der Gruppe von Zyklen erfolgt.

## Revendications

1. Tête de coupe (1) pour une moissonneuse-batteuse agricole (10), la tête de coupe comprenant au moins une transmission à couteaux qui comporte :
- un arbre d'entraînement rotatif (23) conçu pour être accouplé à un arbre de puissance d'une moissonneuse-batteuse agricole lorsque la tête de coupe est accouplée de manière opérationnelle à celui-ci,
- un entraînement mécanique (21) ayant un boîtier et un essieu d'entrée rotatif (33), l'entraînement mécanique étant conçu pour transformer la rotation dudit essieu d'entrée en un mouvement alternatif d'un élément de sortie (22) de l'entraînement mécanique,
- un élément de support (20) comportant un ensemble de couteaux (2) fixé à celui-ci, dans lequel l'élément de support est accouplé audit élément de sortie (22) de l'entraînement mécanique (21) de sorte que les couteaux (2) subissent un mouvement de coupe alternatif,
**caractérisée en ce que :**
- la transmission à couteaux comprend un ou plusieurs capteurs (30, 31) configurés pour mesurer la vibration d'un ou de plusieurs composants de la transmission dans la direction du mouvement des couteaux alternatifs (2),
- les capteurs sont accouplés à une unité de commande (34) qui est comprise dans la tête de coupe (1) ou les capteurs sont configurés pour être accouplés à une unité de commande qui fait partie de la moissonneuse-batteuse (10), dans laquelle l'unité de commande est configurée pour surveiller l'état des couteaux (2) sur la base de signaux reçus provenant du ou des capteurs (30, 31), et
- dans lequel le ou les capteurs comportent un ou plusieurs des éléments suivants :
∘ un accéléromètre (30) monté sur l'élément de support (20),
∘ un accéléromètre (31) monté sur le boîtier de l'entraînement mécanique (21),
∘ une jauge de contrainte montée sur l'élément de support (20).

2. Tête de coupe selon la revendication 1, dans laquelle l'accéléromètre monté sur l'élément de support (20) et/ou sur le boîtier de l'entraînement mécanique (21) est un capteur de cognement.

3. Tête de coupe selon l'une quelconque des revendications précédentes, dans laquelle la tête de coupe (1) comprend en outre un capteur approprié pour déterminer la position des couteaux (2) pendant chaque cycle du mouvement alternatif desdits couteaux, dans laquelle ledit capteur est un codeur (32) monté sur l'essieu d'entrée (33) de l'entraînement mécanique, ou un capteur de déplacement configuré pour mesurer le déplacement de l'élément de support (20).

4. Moissonneuse-batteuse agricole (10) comprenant une tête de coupe (1) selon l'une quelconque des revendications précédentes.

5. Procédé pour la surveillance de l'état des couteaux d'une tête de coupe selon l'une quelconque des revendications 1 à 4, le procédé comprenant les étapes consistant à :
- recevoir un signal de vibration provenant de l'un des capteurs (30, 31), acquis pendant un intervalle de surveillance, l'intervalle de surveillance comprenant une pluralité de cycles du mouvement alternatif,
- dériver une ou plusieurs caractéristiques du signal,
- comparer la ou les caractéristiques à un ou plusieurs seuils,
- dériver, de ladite comparaison, des informations sur l'état des couteaux (2), lesdites informations comportant des dommages potentiels à un ou plusieurs des couteaux lorsqu'il a été constaté qu'une caractéristique dépassait un ou plusieurs des seuils,
- communiquer lesdites informations concernant l'état des couteaux à un opérateur.

6. Procédé selon la revendication 5, dans lequel :
- le signal est échantillonné ou rééchantillonné de manière à obtenir le même nombre d'échantillons dans chaque cycle d'une série de cycles consécutifs du mouvement alternatif effectué pendant l'intervalle de surveillance, chaque échantillon ayant une valeur qui est représentative de la vibration mesurée par le capteur lorsque l'élément de support se trouve dans des positions consécutives bien définies pendant le cycle du mouvement alternatif,
- pour chacun des cycles surveillés, une ou plusieurs desdites caractéristiques sont extraites des échantillons dudit cycle,
- lesdites caractéristiques sont comparées audit ou auxdits seuils.

7. Procédé selon la revendication 6, dans lequel l'échantillonnage ou le rééchantillonnage est effectué sur la base d'un signal distinct obtenu par un capteur dédié, le signal distinct représentant la position de l'élément de support (20) au cours de chaque cycle.

8. Procédé selon la revendication 6, dans lequel la position de l'élément de support pendant chaque cycle est dérivée du signal lui-même, et dans lequel l'échantillonnage ou le rééchantillonnage est effectué sur la base de la position de l'élément de support tel qu'il est dérivé du signal.

9. Procédé selon l'une quelconque des revendications 6 à 8, dans lequel, avant l'extraction de la ou des caractéristiques, le signal est filtré par un filtre qui supprime au moins la fréquence du mouvement alternatif de l'élément de support (20).

10. Procédé selon la revendication 9, dans lequel le filtre appliqué est l'un des quatre filtres suivants, nommés respectivement :
- résiduel moyen synchrone fixe (FSAR)
- résiduel moyen synchrone mobile (MSAR)
- résiduel moyen synchrone mobile pondéré de manière exponentielle (EWMSAR)
- résiduel normalisé synchrone mobile pondéré de manière exponentielle (EWMSNR)
dans lequel, dans chaque cas, une valeur moyenne est soustraite des échantillons du j^{e} cycle de l'intervalle de surveillance (40), lesdits échantillons formant une matrice unidimensionnelle Xj contenant tous les échantillons du j^{e} cycle, pour aboutir à un échantillon filtré résiduel q, et dans lequel ladite moyenne est calculée comme suit dans les quatre cas :
- pour le FSAR, la moyenne est la moyenne d'un nombre fixe de cycles acquis au début de l'intervalle de surveillance,
- pour le MSAR, la moyenne est la moyenne d'un nombre fixe de cycles acquis immédiatement avant le j^{e} cycle,
- pour l'EWMSAR et l'EWMSNR, une moyenne pondérée est calculée comme *zᵢ* = *λxᵢ +* (1 - *λ*)*z*ᵢ₋₁ dans une fenêtre (43) commençant au début de l'intervalle de surveillance (40) et précédant immédiatement le j^{e} cycle, avec z₁ = x₁, λ étant une valeur prédéfinie comprise entre 0 et 1, et dans lequel le rⱼ résiduel est calculé comme suit : ${r}_{j} = {x}_{j} - {z}_{j - 1}$
pour l'EWMSAR,
∘${r}_{j} = \frac{{x}_{j} - {z}_{j - 1}}{\sqrt{{s}_{j - 1}}}$ pour l'EWMSNR, avec ${s}_{i} = λ {\left({x}_{i}-{z}_{i - 1}\right)}^{2} + \left(1-λ\right) {s}_{i - 1} ,$ et avec *s*₁ = (*x*₂ - *z*₁)².

11. Procédé selon la revendication 10, dans lequel l'un ou l'autre des filtres MSAR, EWMSAR et EWMSNR est appliqué, et dans lequel, si un événement potentiellement dommageable est détecté dans un cycle, ledit cycle est exclu du calcul de la moyenne appliquée pour le filtrage des cycles suivants.

12. Procédé selon l'une quelconque des revendications 5 à 11, dans lequel ladite ou lesdites caractéristiques comportent une ou plusieurs des éléments suivants :
- la moyenne des échantillons d'un cycle,
- l'écart-type des échantillons d'un cycle,
- le maximum absolu des échantillons d'un cycle.

13. Procédé selon l'une quelconque des revendications 5 à 12, comprenant en outre les étapes suivantes :
- après un ou plusieurs intervalles de surveillance, les couteaux sont inspectés par inspection visuelle,
- l'état détecté visuellement des couteaux est comparé à l'état communiqué par ledit procédé selon l'une quelconque des revendications 6 à 13,
- sur la base de ladite comparaison, des ajustements sont apportés à un ou plusieurs paramètres appliqués dans lesdites étapes précédentes, de sorte qu'un ou plusieurs paramètres ajustés sont appliqués dans des exécutions ultérieures dudit procédé selon l'une quelconque des revendications 6 à 13.

14. Procédé selon l'une quelconque des revendications 5 à 13, dans lequel lesdites informations concernant l'état des couteaux comprennent une classification dudit état en deux classes ou plus, lesdites classes étant liées à différents degrés d'endommagement d'un ou de plusieurs des couteaux.

15. Procédé selon la revendication 14 combinée à la revendication 6, dans lequel ladite classification est effectuée sur la base du cycle au cours duquel un événement potentiellement dommageable est détecté et sur la base d'au moins l'un des cycles suivant immédiatement ledit cycle, et dans lequel la classification est effectuée sur la base d'un nombre d'échantillons représentatifs au sein dudit groupe de cycles.
